# EUROPEAN PATENT APPLICATION

(11) **EP 2 278 822 A1**
(43) Date of publication of application: **26.01.2011**
(21) Application number: 09165590.2
(22) Date of filing: 15.07.2009
(51) Int. Cl.: H04N 13/00

(54) **3D image processing**

(71) Applicant: Trident Microsystems (Far East) Ltd., Grand Cayman (KY)
(72) Inventor: Cordes, Nico, Redhill, Surrey RH1 1DL (GB); Riemens, Bram, Redhill, Surrey RH1 1DL (GB); Ciacci, Massimo, Redhill, Surrey RH1 1DL (GB); Gangwal, O.P., Redhill, Surrey RH1 1DL (GB); Hofman, Paul, Redhill, Surrey RH1 1DL (GB)
(74) Representative: Epping - Hermann - Fischer

(57) **Abstract**

An image creation method uses first and second images which comprise 2D views of a 3D scene from different viewpoints. The images are combined to derive a third image representing a 2D view of the 3D scene from a third viewpoint, with greater pixel resolution than the pixel resolution of the first and second images.

This method uses the fact that the stereo images are closely related, to enable construction from the two images of a third image of higher resolution. This third image can then be provided as a single higher resolution 2D image, or else the third image can be used to enhance one of the original stereo 2D images.

## Description

This invention relates to the processing of 3D images, in particular the processing of a pair of 2D images, each representing a 3D scene as viewed from two adjacent viewpoints.

Such 3D images are used for driving 3D displays. These displays can take various forms. One example is an autostereoscopic display, in which an imaging arrangement placed over a conventional display directs the different views to different eyes of the user. The imaging arrangement can comprise a barrier structure or a lens structure. This type of device does not require the view to wear any special glasses, but does require the use to be in a specific position for the 3D effect to work most effectively. Other designs require the viewer to wear special glasses. For example the different views can be provided with different polarizations, and the glasses separate the views for the two eyes of the viewer. The different types of 3D display will be well known to those skilled in the art.

All 3D displays have in common that they present different views to both eyes, hence requiring (at least) two different views of a scene.

The standardization of a 3D video format is in progress, based on this two-image stereo format, in which two different view-points of a scene are transmitted or stored.

The transmission of two images over a given bandwidth, or the storage of the images with a given memory allocation, implies a required reduction in resolution compared to the resolution which could have be provided for a single image.

According to the invention, there is provided an image creation method, comprising:
receiving a first image which comprises a 2D view of a 3D scene from a first viewpoint at a given moment in time, the first image comprising a set of pixels;
receiving a second image which comprises a 2D view of the 3D scene from a second, different, viewpoint but at the same given moment in time, the second image comprising a set of pixels;
combining the first and second images to derive a third image representing a 2D view of the 3D scene from a third viewpoint, wherein the third image comprises a set of pixels with greater pixel resolution than the pixel resolution of the first and second images.

This method uses the fact that the stereo images are closely related, to enable construction from the two images of a third image of higher resolution. This third image can then be provided as a single higher resolution 2D image (for example for a display in which there are 3D and 2D modes), or else the third image can be used to enhance one of the original stereo 2D images. Both stereo 2D images can be enhanced in this way. In the case of a single higher resolution 2D image, the third viewpoint does not have to correspond to one of the first and second viewpoints; it could be at a midpoint.

In this method, both stereo images are used to reconstruct spatial resolution that may have been lost in the original stereo images.

In one example, combining the first and second images comprises applying a motion estimation or compensation algorithm or a disparity estimation or compensation algorithm to transform one image into an image from the other viewpoint. This step effectively provides two images from the same viewpoint, but which have been sampled at different points - the sampling is represented by the individual pixels generated for the images. In one example, the motion estimation algorithm or disparity compensation algorithm comprises the 3DRS algorithm. Of course, the first and second images could be combined into an image from a different, third viewpoint.

The combination of the two images from the same viewpoint can then further comprise generating interpolated pixels from the pixels of the transformed image and the pixels of the image from the other viewpoint. Thus, the fact that two different sets of samples are available is used to enable an increase in resolution by interpolation. Generating the interpolated pixels can comprise using a 1D horizontal interpolation algorithm, because the disparity is expected only in the horizontal direction. Thus, the increased resolution is in the horizontal direction only.

As outlined above, the first and second images preferably comprise a pair of views of the 3D scene which together comprise a single stereoscopic view.

The increase in resolution is possible when the first and second images do not already contain all the original information content - i.e. if the pixels do not already represent the image content sampled at a spatial resolution greater than the Nyquist frequency. This will be the case, for example, when the first and second images comprise under-sampled images of the 3D scene. By under-sampled is meant a spatial pixel resolution below that corresponding to the Nyquist frequency. Alternatively, the first and second images can comprise downscaled versions of over-sampled images of the 3D scene.

The invention also provides a method of increasing the resolution of a pair of stereo images of a 3D scene, comprising:
increasing the resolution of the first image of the pair using the method of any preceding claim, by selecting the third viewpoint as the first viewpoint so that the resulting third image comprises an increased resolution version of the first image; and
increasing the resolution of the second image of the pair using the method of any preceding claim, by selecting the third viewpoint as the second viewpoint so that the resulting third image comprises an increased resolution version of the second image.

This method is used to increase the resolution of both of the images. This means that a pair of stereo images can be transmitted from a transmitter which has been deliberately undersampled (and therefore lower bandwidth and memory requirement) in the knowledge that the receiver can combine the images in a way to recover the original resolution. Thus, resolution can be recovered at the receiver side by adjusting the scaling process in the transmitter. This method also maintains backward-compatibility with existing receivers, in that they do not have the capability for deriving the increased resolution images, but can nevertheless process the stereo pair of images in conventional manner, because the transmission format for the individual images can remain unchanged. However, the individual images will contain more alias when decoded by a conventional receiver, so that the modified receiver of the invention is preferred.

The invention also provides a sampling and transmission method, comprising:
generating first and second images which comprise respective 2D views of a 3D scene from respective first and second viewpoints, wherein the images are undersampled images or are downscaled from previously oversampled images, the first and second images comprising respective sets of pixels;
transmitting the images to an image processor;
in the image processor, implementing the method of the invention to derive the third image or third images.

The invention also provides an image processing apparatus, comprising:
an input for receiving a first image which comprises a 2D view of a 3D scene from a first viewpoint at a given moment in time, the first image comprising a set of pixels;
an input for receiving a second image which comprises a 2D view of the 3D scene from a second, different, viewpoint but at the same given moment in time, the second image comprising a set of pixels; and
a processor for combining the first and second images to derive a third image representing a 2D view of the 3D scene from a third viewpoint, wherein the third image comprises a set of pixels with greater pixel resolution than the pixel resolution of the first and second images.

An example of the invention will now be described in detail with reference to the accompanying drawings, in which:
Figure 1 shows an analogue signal sampled at a frequency fs with a corresponding sampling period Ts;
Figure 2 shows two independent sets of samples, each at half the sampling frequency fs/2N with a corresponding sampling period 2Ts;
Figure 3 shows an example of image creation method of the invention;
Figure 4 shows a second example of image creation method of the invention; and
Figure 5 schematically shows an interpolation process used in the method and system of the invention.

This invention relates to the processing of first and second images, each comprising a set of pixels, which comprise 2D views of a 3D scene from different, viewpoints. Such pairs of images are of most interest for 3D display applications.

Various standardization activities are currently in progress to agree upon a format for the supply of the image data to a receiver (e.g. 3D TV). The most likely choice is the so-called stereo format, in which the two viewpoints are transmitted as two different and complete 2D images. Little processing is then required to present the viewer with the two views (an alternative would be a single view together with depth information to enable the second view to be calculated).

The spatial resolution of video content is often limited due to bandwidth or compatibility restrictions in the transmission or storage process. As an increase in spatial resolution results in a direct increase in bandwidth or storage requirements, a compromise often has to be reached between resolution and bandwidth.

At the same time, display innovation is often rapid, meaning that displays are capable of showing higher resolutions than the content. Hence, this poses the challenge of how to optimally exploit a display, given a lower resolution content. Multiple solutions exist for this, where the most popular concepts are based on a combination of scaling and sharpness enhancement to create the *impression* of more resolution (detail), yet without actually increasing the meaningful resolution of the image.

The invention is based on the recognition that stereo input (i.e. two complete 2D images representing a 3D scene from different viewpoints) enables the spatial resolution of the image to be actually increased. Nyquist stated that reconstruction of a continuous signal is only possible if this signal is limited to half the frequency prior to sampling, that is the so-called Nyquist sampling frequency 0.5*Fₛ. In other words, the sampling frequency Fₛ needs to be at least twice as high as the signal's highest frequency.

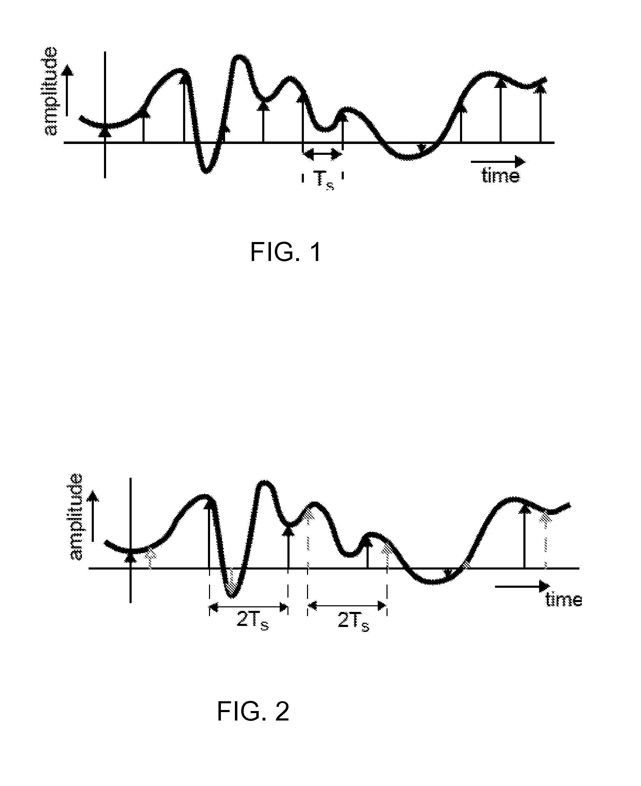

Figure 1 shows an analogue signal sampled at a frequency fs with a corresponding sampling period Ts.

In 1956, J. L Yen showed (in the article 'On Non-uniform Sampling of Bandwidth-Limited Signals', IRE Transactions on Circuit Theory, Vol. CT-3, Dec. 1956, pp. 251-257) a generalization of the sampling theorem, proving that a signal with a bandwidth of 0.5fs can be reconstructed from N independent sets of samples, all obtained by sampling the signal at fs/N. The implication of this is that the full signal may be restored from multiple versions of an under-sampled data set. For example, given two sets of independent samples of the same signal, frequencies up to twice the Nyquist frequency of both individual sets of samples can be obtained.

Figure 2 shows two independent sets of samples, each at half the sampling frequency fs/2N with a corresponding sampling period 2Ts. These can be used to obtain the same signal content as the set of samples in Figure 1.

This concept is known as Generalized Sampling Theorem (GST), and has been previously applied to de-interlacing, where the current field corresponded to the first independent sampling of the signal, and a motion-compensated version of a previous field was used as a second independent sampling of the signal. Indeed, it was shown that resolution could be restored more effectively than previous de-interlacing methods.

In this invention, the GST concept is applied to stereo input signals (or more generally to pairs of signals from different viewpoints).

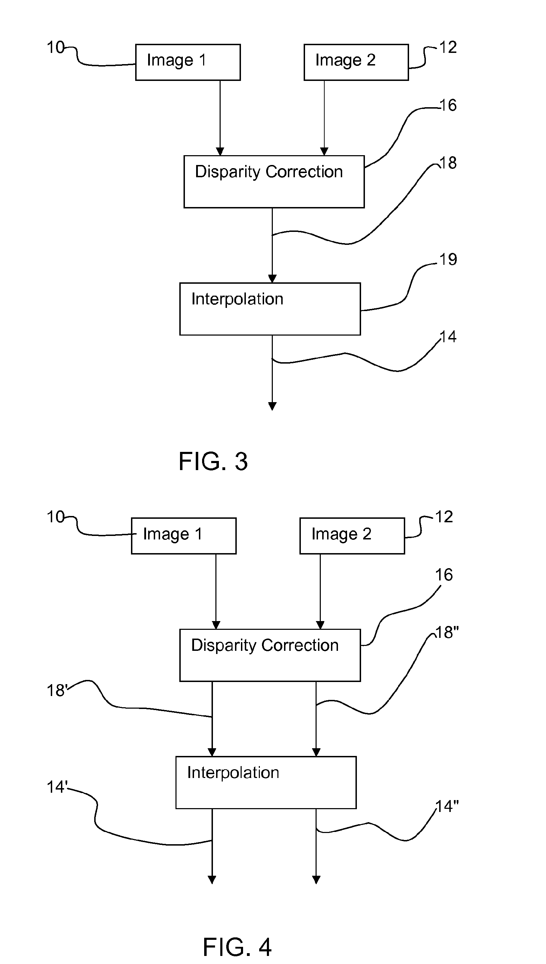

Figure 3 shows an example of an image creation method of the invention.

A first image 10 comprises a 2D view of a 3D scene from a first viewpoint and the first image comprises a set of pixels. The resolution of the pixels essentially defines the sampling rate used.

A second image 12 comprises a 2D view of the 3D scene from a second, different, viewpoint. The second image 12 also comprises a set of pixels.

The two images are received by a processor which is part of a display apparatus. The images can be provided to the display apparatus from a remote source, for example as broadcast signals, or from a data storage device such as a DVD or other memory device.

The first and second images are combined to derive a third image 14 representing a 2D view of the 3D scene from a third viewpoint. The third image 14 comprises a set of pixels with greater pixel resolution than the pixel resolution of the first and second images.

In one example, the combining of the first and second images comprises applying a motion estimation or compensation algorithm 16 or a disparity estimation or compensation algorithm to transform one image into an image from the other viewpoint. This step effectively provides two images from the same viewpoint, but which have been sampled at different points. The data for these two images is represented by the single arrow 18. It is noted that there is no motion between the images, as they are images taken at the same point in time. However, the image analysis techniques used in motion estimation and compensation can be applied, because the movement of the viewpoint can be considered to introduce relative motion between the points in the scene and the viewpoint, which relative motion is also depth-dependent.

In one example, the motion estimation/compensation algorithm or disparity estimation/compensation algorithm comprises the 3DRS (3D recursive search block matching) algorithm. This is described for example in Gerard de Haan et al. "True-Motion Estimation with 3-D Recursive Search Block Matching", IEEE Transactions on Circuits and Systems for Video Technology, vol. 3, No. 3, No. 5, October 1993.

Thus, motion estimation and compensation can be used as an approximate way to transform the image from one viewpoint to another- in that all points in the image have experienced motion with respect to the changed viewpoint. Any motion estimation algorithm can be used for this purpose.

Instead of using motion estimation and compensation, known methods for disparity estimation between the left and the right image are also known. These are for example used to enable depth information to be extracted from pairs of images, based on relative speeds of movement. In this case, an independent set of samples for the right image is obtained by disparity compensating the left image towards the right, and/or an independent set of samples for the left image is obtained by disparity compensating the right image towards the left.

Thus, various algorithms are widely available which can be selected by those of ordinary skill in the art to enable the pair of views to be processed such that they effectively represent images of the 3D scene from the same viewpoint, but with different sampling.

The combination of the two images from the same viewpoint (image 18) is then subjected to interpolation by interpolation unit 19. Thus, the fact that two different sets of samples are available is used to enable an increase in resolution by interpolation. Generating the interpolated pixels can comprise using a 1D horizontal interpolation algorithm, because the disparity is expected only in the horizontal direction. Thus, the increased resolution is in the horizontal direction only.

Interpolated samples are then obtained within a sampling grid with up to a doubled spatial resolution. Examples of suitable interpolation filters are described in:
(i) P. Delogne, L. Cuvelier, B. Maison, B. Van Caillie, and L. Vandendorpe, 'Improved Interpolation, Motion Estimation and Compensation for Interlaced Pictures', IEEE Tr. on lm. Proc., Vol. 3, no. 5, Sep. 1994, pp. 482-491;and
(ii) L. Vandendorpe, L. Cuvelier, B. Maison, P. Quelez, and P. Delogne, 'Motion-compensated conversion from interlaced to progressive formats', Signal Processing: Image Communication 6, Elsevier, 1994, pp. 193-211.

As mentioned above, a 1D horizontal interpolation is sufficient in most cases, as disparity is per definition only along the horizontal direction. However, if the vertical calibration of the cameras creating the two images is imperfect, a vertical mismatch can occur between both images that may enable a resolution increase in the vertical direction as well. Here, the usage of 2D interpolation filters may be required, as outlined in C. Ciuhu and G. de Haan, 'A two-dimensional generalized sampling theory and application to de-interlacing', SPIE, Proceedings of VCIP, Jan. 2004, pp. 700-711.

Indeed, the cameras can be deliberately misaligned vertically by a small amount so as to ensure that two independent sets of samples are provided in the vertical direction. A very small misalignment is sufficient.

Thus, various algorithms are widely available which can be selected by those of ordinary skill in the art to enable interpolation from the pixels of the pair of views from the same viewpoint to increase the effective resolution.

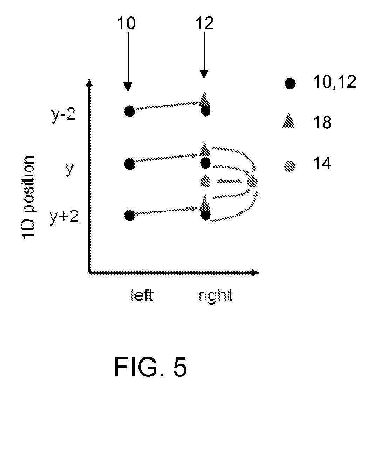

Figure 5 schematically shows the interpolation process, and shows the left image as samples 10 (the first image) and the right image as samples 12 (the second image). The left image 10 is motion compensated (or disparity corrected) to the viewpoint of the right image, and the resulting samples are shown as 18. The interpolation yields additional samples 14.

It is noted that the possible increase in resolution will not be uniform across the image. For example the resolution of parts of the 3D scene which are occluded in one image will not be able to be increased beyond the resolution of the image in which they are visible. However, the overall average resolution will be increased, i.e. the total number of pixels carrying independent information which are used to represent the image.

The resulting third image 14 can be a single higher resolution 2D image (for example for a display in which there are 3D and 2D modes). In this case, the effective viewpoint of the third image 14 does not need to be the same as either of the first and second images 10,12. Both of the first and second images 10,12 may instead be transformed to a different third viewpoint.

In another example, shown in Figure 4, the resulting third image can be used to enhance one of the original stereo 2D images. Both stereo 2D images can be enhanced in this way.

Thus there is one combination of the two images from the one viewpoint (image 18') and one combination of the two images from the other viewpoint (image 18"). Each of these is then subject to interpolation to create two output images 14' and 14".

In this method, both stereo images are used to reconstruct spatial resolution that may have been lost in the original stereo images.

The increase in resolution is possible when the first and second images do not already contain all the original information content - i.e. if the pixels do not already represent the image content sampled at a spatial resolution greater than the Nyquist frequency. This will be the case, for example, when the first and second images comprise under-sampled images of the 3D scene. By under-sampled is meant a spatial pixel resolution below that corresponding to the Nyquist frequency. Alternatively, the first and second images 10,12 can comprise downscaled versions of over-sampled images of the 3D scene.

Also, the resolution increase is only possible if there is not perfect overlap of samples. In other words, there needs to be disparity between both views. In the case of parallel aligned cameras, only an infinite object distance creates a zero disparity between both images. Hence, the non-zero disparity is obtained even for still areas.

In addition to the disparity requirement, the second sampling grid, after motion compensation, should not overlap with the first. If this is the case, the speed (or disparity) is termed 'critical', in which case the GST principle does not work anymore: instead of two independent set of samples, there are two sets of samples at exactly the same location. This may be still useful (e.g. noise reduction), but is not suitable for increasing the resolution.

In practice, integer speeds (1 pixel, 2 pixel, ...) are critical, whereas sub-pixel speeds (e.g. 1.25 pixel, 2.63 pixel) are non-critical. Since the speeds vary locally, some areas of the image may have critical speed, meaning that there is no resolution gain. Also, a direct consequence of this is that the motion or disparity estimation/compensation should be able to estimate sub-pixel motion/disparity.

Thus, in one example the disparity (i.e. distance between cameras) is not a perfect integer multiple of the pixel size.

The need for alias means that the transmitter (or data storage device acting as the data source) can deliberately store lower bandwidth/lower data volume images, by adjusting the scaling process in the transmitter/image generation unit. For example, horizontal downscaling can be performed in a deliberate way using low-quality scalers, e.g. by pixel dropping, in order to introduce alias during the downscaling process. This alias is then used by the receiver to (partially) reconstruct the lost resolution. Such a system is backward compatible with prior receivers, as the only drawback for implementation without the resolution recovery system is an increase in alias, which is often only slightly visually disturbing.

The generation of an increased resolution 2D mode can be used for a display which is switchable between 2D and 3D modes, or when the display device does not have the required 3D capability. In the case of a 3D display, the resolution of both views can be enhanced by both compensating the left view to the right, and simultaneously compensating the right view to the left.

The invention can be applied to any device that may have the necessity for resolution enhancement and is capable of receiving stereo video input, such as TVs, PCs, set-top boxes, in-car entertainment systems, etc. The implementation may be in software (e.g. running on Windows/x86 platform or a NXP Trimedia processor), but may also be implemented in hardware (e.g. ASIC or FPGA).

The description above relates to the processing of pairs of images. However, the invention can also be applied to image data for images from more than two viewpoints. Each time the number of viewpoints is reduced, the resolution can be increased.

The invention offers an opportunity for a transmission standard in which resolution can be recovered at the receiver side by adjusting the scaling process in the transmitter, whilst largely maintaining backward-compatibility with existing receivers.

Various modifications will be apparent to those skilled in the art.

## Claims

1. An image creation method, comprising:
receiving a first image (10) which comprises a 2D view of a 3D scene from a first viewpoint at a given moment in time, the first image comprising a set of pixels;
receiving a second image (12) which comprises a 2D view of the 3D scene from a second, different, viewpoint but at the same given moment in time, the second image comprising a set of pixels;
combining the first and second images to derive a third image (14) representing a 2D view of the 3D scene from a third viewpoint, wherein the third image comprises a set of pixels with greater pixel resolution than the pixel resolution of the first and second images.

2. A method as claimed in claim 1, wherein combining the first and second images (10,12) comprises applying a motion estimation or compensation algorithm or a disparity estimation or compensation algorithm (16) to transform one image into an image from the other viewpoint.

3. A method as claimed in claim 2, wherein the motion estimation or compensation algorithm or disparity estimation or compensation algorithm (16) comprises the 3DRS algorithm.

4. A method as claimed in claim 2 or 3, wherein combining the first and second images (10,12) further comprises generating interpolated pixels from the pixels of the transformed image and the pixels of the image from the other viewpoint.

5. A method as claimed in claim 4, wherein generating interpolated pixels comprises using a 1D horizontal interpolation algorithm.

6. A method as claimed in any preceding claim, wherein the first and second images (10,12) comprises a pair of views of the 3D scene which together comprise a single stereoscopic view.

7. A method as claimed in any preceding claim, wherein the first and second images (10,12) comprise under-sampled images of the 3D scene.

8. A method as claimed in claim 7, wherein the first and second images (10,12) comprise downscaled versions of over-sampled images of the 3D scene.

9. A method of increasing the resolution of a pair of stereo images of a 3D scene, comprising:
increasing the resolution of the first image (10) of the pair using the method of any preceding claim, by selecting the third viewpoint as the first viewpoint so that the resulting third image comprises an increased resolution version of the first image; and
increasing the resolution of the second image (12) of the pair using the method of any preceding claim, by selecting the third viewpoint as the second viewpoint so that the resulting third image comprises an increased resolution version of the second image.

10. A sampling and transmission method, comprising:
generating first and second images (10,12) which comprise respective 2D views of a 3D scene from respective first and second viewpoints, wherein the images are undersampled images or are downscaled from previously oversampled images, the first and second images comprising respective sets of pixels;
transmitting the images to an image processor;
in the image processor, implementing the method as claimed in any preceding claim to derive the third image or third images.

11. An image processing apparatus, comprising:
an input for receiving a first image (10) which comprises a 2D view of a 3D scene from a first viewpoint at a given moment in time, the first image comprising a set of pixels;
an input for receiving a second image (12) which comprises a 2D view of the 3D scene from a second, different, viewpoint but at the same given moment in time, the second image comprising a set of pixels; and
a processor for combining the first and second images to derive a third image representing a 2D view of the 3D scene from a third viewpoint, wherein the third image comprises a set of pixels with greater pixel resolution than the pixel resolution of the first and second images.

12. An apparatus as claimed in claim 11, wherein the processor comprises a motion estimation or compensation algorithm or a disparity estimation or compensation algorithm (16) to transform one image into an image from the other viewpoint.

13. An apparatus as claimed in claim 11 or 12, wherein the motion estimation or compensation algorithm or disparity estimation or compensation algorithm (16) comprises the 3DRS algorithm.

14. An apparatus as claimed in claim 11, 12 or 13, wherein the processor comprises an interpolation algorithm (19) for providing interpolated pixels from the pixels of the transformed image and the pixels of the image from the other viewpoint.

15. An apparatus as claimed in any one of claims 11 to 14, wherein the processor is adapted to:
increase the resolution of the first image (10) by defining the resulting third image as an increased resolution version of the first image from the first viewpoint; and
increase the resolution of the second image (12) by defining the resulting third image as an increased resolution version of the second image from the second viewpoint.
